# EUROPÄISCHE PATENTANMELDUNG

(11) **EP 0 530 742 A2**
(43) Veröffentlichungstag der Anmeldung: **10.03.1993**
(21) Anmeldenummer: 92114912.6
(22) Anmeldetag: 01.09.1992
(51) Int. Cl.: B62B 3/06

(54) **Flurförderzeug**

(30) Priorität: 03.09.1991 FR 9110885
(71) Anmelder: Linde Aktiengesellschaft, D-65189 Wiesbaden (DE)
(72) Erfinder: Patrat, Jean Claude, F-86180 Buxerolles (FR)
(74) Vertreter: Schaefer, Gerhard, Dr.

(57) **Zusammenfassung**

Ein Flurförderzeug weist mindestens vier Räder 1 bis 4 auf, von denen jeweils zwei in Fahrzeuglängsrichtung hintereinanderliegend angeordnet sind. Es wird vorgeschlagen, die Räder 3, 4 zumindest einer Fahrzeugseite lastausgleichend miteinander zu verbinden. Hierdurch wird eine statische Unbestimmtheit vermieden und zugleich eine im Hinblick auf die Stabilität des Flurförderzeugs günstige Anordnung eines Stützdreiecks erreicht.

## Beschreibung

Die Erfindung betrifft ein Flurförderzeug mit mindestens vier Rädern, von denen jeweils zwei in Fahrzeuglängsrichtung hintereinanderliegend auf einer Fahrzeugseite angeordnet sind.

Bei derartigen Flurförderzeugen liegt im Gegensatz zu dreirädrigen Flurförderzeugen eine statische Unbestimmtheit vor. Um dennoch eine statisch bestimmte Auflage eines solchen Flurförderzeugs auf einer Fahrbahn zu erreichen, ist es beispielsweise bei Gegengewichts-Gabelstaplern bekannt, die heckseitige Lenkachse als Pendelachse auszubilden und etwa in Achsmitte gelenkig mit dem Rahmen des Flurförderzeugs zu verbinden. Auf diese Weise werden die beiden radseitigen Auflagerstellen der Lenkachse zu einer rahmenseitigen Auflagerstelle zusammengefaßt. In Verbindung mit den beiden Auflagerstellen der Räder, die an der fest mit dem Rahmen verbundenen Vorderachse angeordnet sind, ergibt sich somit ein Stützdreieck. Das System ist daher statisch bestimmt.

Das Stützdreieck ist für die statische und dynamische Standsicherheit des Flurförderzeugs maßgebend.

Statische Standsicherheit liegt dann vor, wenn sich bei stillstehendem Fahrzeug der gemeinsame Schwerpunkt von Flurförderzeug und zu transportierender Last in der Vertikalprojektion gesehen innerhalb des Stützdreiecks befindet.

Bei fahrendem Flurförderzeug sowie beim Anheben und Absenken der Last und beim Bewegen der Last (Neigebewegung des Hubgerüstes, seitliches Verschieben der Last durch sogenannte Seitenschieber) kommen dynamische Belastungen hinzu, die aus Fliehkräften bei Kurvenfahrt sowie Massenkräften beim Beschleunigen und Verzögern herrühren und sich in Verformungen der Reifen, des Rahmens, des Hubgerüstes und sonstiger Teile des Flurförderzeugs äußern.

Die Standsicherheit wird bestimmt von den geometrischen Abmessungen des Stützdreiecks, die wiederum von Spurweite und Achsabstand des Flurförderzeugs abhängen, und vom Gewicht und der Gewichtsverteilung des Flurförderzeugs und der Last.

Insbesondere bei Flurförderzeugen, die ein Stützdreieck mit schmaler Basis aufweisen, beispielsweise Hubwagen (Niederhubwagen, Hochhubwagen, Kommissionierer) oder Schubmaststapler, kann es leicht zu einem seitlichen Umkippen des Fahrzeugs bei angehobener Last kommen. Um dies zu verhindern, hat man bei solchen Fahrzeugen deshalb schon Maßnahmen vorgeschlagen, mit denen Unebenheiten beim Überfahren vom Fahrwerk schwankungsfrei aufgenommen werden sollen. So ist in der DE-PS 37 10 757 ein Gabelhubwagen beschrieben, dessen beiden lastarmseitigen Tragrollen, die jeweils als Tandemrollen ausgebildet sind, durch ein mechanisches oder hydraulisches Gestänge zum Zwecke des Ausgleichs von Bodenunebenheiten miteinander achslastausgleichend verbunden sind. Dabei ergibt sich jedoch nachteiligerweise ein (gleichschenkliges) Stützdreieck, dessen Spitze zwischen den beiden Tragrollen angeordnet ist. Wird eine Last etwas außermittig aufgenommen, so kann es daher leicht vorkommen, daß der gemeinsame Schwerpunkt von Flurförderzeug und Last, der sich bei einer schweren Last eher im Bereich der Dreieckspitze des Stützdreiecks befindet, bei angehobener Last und sich bewegendem Fahrzeug infolge Fahrzeug- und Hubgerüstverformungen aus dem Stützdreieck seitlich herauswandert und das Fahrzeug umkippt.

Der vorliegenden Erfindung liegt die Aufgabe zugrunde, ein Flurförderzeug der eingangs genannten Art mit verbesserter Stabilität zur Verfügung zu stellen.

Diese Aufgabe wird erfindungsgemäß dadurch gelöst, daß die Räder zumindest einer Fahrzeugseite lastausgleichend miteinander verbunden sind. Der erfindungswesentliche Gedanke besteht demnach darin, einen Lastausgleich zwischen zwei auf einer Fahrzeugseite hintereinanderliegenden Rädern vorzunehmen und damit zum einen eine statische Unbestimmtheit zu vermeiden und zum anderen eine im Hinblick auf die Stabilität des Flurförderzeugs günstige Anordnung des Stützdreiecks zu erreichen. Die Basis des Stützdreiecks wird in diesem Fall, also bei einem vierrädrigen Flurförderzeug mit je zwei Rädern auf einer Achse, von der Verbindungslinie der beiden hintereinanderliegenden Räder der einen Fahrzeugseite gebildet, wobei diese beiden Räder nicht im Sinne eines Lastausgleichs miteinander in Wirkverbindung stehen. Die Dreieckspitze liegt auf der Verbindungslinie zwischen den auf der anderen Fahrzeugseite angeordneten Rädern, die lastausgleichend miteinander verbunden sind. Die dadurch erreichte Stabilitätsverbesserung gegenüber einem Flurförderzeug des bekannten Standes der Technik ist insbesondere bei Seitlichen Belastungen, d.h. Belastungen quer zur Fahrzeuglängsachse, gegeben. Ein erfindungsgemäß ausgebildetes vierrädriges Flurförderzeug eignet sich daher beispielsweise vorzüglich als Seitenstapler.

Besonders vorteilhaft ist es jedoch, Hubwagen, beispielsweise Hochhubwagen oder Niederhubwagen (dabei kann es sich sowohl um Handgeräte als auch um Elektro-Geh- oder Elektro-Stand- oder Elektro-Fahrersitz-Geräte sowie Kommissioniergeräte handeln) und ähnliche Fahrzeuge (Schubmaststapler, Spreizenstapler) erfindungsgemäß auszubilden. Bei derartigen Hubwagen, die zur Stabilitätsverbesserung mit mehr als drei Rädern versehen sind, tritt durch die statische Unbestimmtheit das Problem auf, daß unter Umständen (z.B. bei Bodenunebenheiten) das Antriebsrad den Bodenkontakt verliert, weil Fahrwerk und Radaufhängung starr sind. Dies hat den Verlust der Lenkbarkeit und der Antriebs- und Bremsfähigkeit zur Folge. Bei einem solchen Fahrzeug, mit zwei auf einer gemeinsamen Querachse angeordneten, voneinander beabstandeten Tragrollen, einem deichselgelenkten Antriebsrad, das in Fahrzeuglängsrichtung zur Tragrollenachse beabstandet ist, und einer seitlich des Antriebsrades beabstandeten, als Nachlaufrolle ausgebildeten Stabilisatorrolle, ist es daher günstig, wenn die Stabilisatorrolle mit der Tragrolle derjenigen Fahrzeugseite, in deren Bereich die Stabilisatorrolle angeordnet ist, lastausgleichend in Wirkverbindung steht. Es ist dadurch unter allen Bedingungen gewährleistet, daß das Antriebsrad stets ausreichenden Kontakt zur Fahrbahn hat.

Bei Hubwagen, bei denen das deichselgelenkte Antriebsrad im Bereich der Fahrzeuglängsmittelachse angeordnet und beiderseits des Antriebsrades je eine Stabilisatorrolle vorgesehen ist, die somit mit fünf Rädern versehen sind, ist es üblich, die beiden Stabilisatorrollen oder das Antriebsrad unter Federvorspannung zu setzen oder hydraulisch in Richtung zur Fahrbahn zu drücken, um somit die statische Unbestimmtheit zu kompensieren und dennoch eine Stabilitätserhöhung gegenüber dreirädrigen Hubwagen zu erreichen. Gemäß einer besonders vorteilhaften Weiterbildung der Erfindung wird für solche Fahrzeuge vorgeschlagen, daß jeweils die Stabilisatorrolle mit der Tragrolle derjenigen Fahrzeugseite, in deren Bereich die Stabilisatorrolle angeordnet ist, lastausgleichend in Wirkverbindung steht. Es ergibt sich dadurch ein Stützdreieck, dessen Spitze vom Kontaktpunkt des Antriebsrades zur Fahrbahn gebildet wird und dessen Basis von einer Linie gebildet wird, die die beiden Verbindungslinien zwischen rechter Tragrolle und rechter Stabilisatorrolle sowie linker Tragrolle und linker Stabilisatorrolle halbiert. Die Auflagerkräfte werden dabei an fünf Stellen in den Rahmen des Flurförderzeugs eingeleitet. Dadurch wird der Rahmen weit weniger verformt als bei einer Krafteinleitung an nur drei Stellen. Insbesondere wird die Torsionsbeanspruchung stark reduziert. Aus der geringeren Verformung resultiert eine höhere Standsicherheit des erfindungsgemäßen Flurförderzeugs. Ein anderer Vorteil ergibt sich dann, wenn die Standsicherheit eines erfindungsgemäß auszubildenden Flurförderzeuges der Stand der Technik an sich bereits ausreichend ist und somit eigentlich nicht erhöht werden muß. In diesem Fall kann bei Anwendung der Erfindung der Rahmen leichter und somit billiger gebaut werden. Beide Vorteile können auch kombiniert werden.

Die lastausgleichende Wirkverbindung kann auf vielfältige Weise realisiert werden. So ist es zum Beispiel möglich, die Tragrolle und Stabilisatorrolle hydrostatisch miteinander zu koppeln ("hydraulisches Gestänge"). In diesem Fall werden die Radlasten der Stabilisatorrolle und der Tragrolle jeweils in hydraulische Zylinder-Kolben-Aggregate eingeleitet, deren Druckräume durch Leitungen miteinander verbunden sind.

Sofern ein mechanisches Gestänge zur Realisierung der Wirkverbindung verwendet werden soll, ergibt sich gemäß einer zweckmäßigen Ausgestaltung der Erfindung bei einem Hubwagen, bei dem die lastausgleichend miteinander in Wirkverbindung stehenden Rollen jeweils mittels eines Längslenkers am Rahmen des Flurförderzeugs gelagert sind, eine funktionssichere und einfach aufgebaute Wirkverbindung dadurch, daß jeder Längslenker zusätzlich zu dem Hebelarm, an dem die Rolle befestigt ist, einen zweiten Hebelarm aufweist, der mit einer sowohl auf Zug als auch auf Druck belastbaren Verbindungsstange gelenkig verbunden ist.

In Weiterbildung der Erfindung wird vorgeschlagen, daß bei einem Flurförderzeug, bei dem ein Hubmechanismus zum Anheben der Last vorgesehen ist, der Hubmechanismus in die lastausgleichende Wirkverbindung integriert ist. Bei den Hubwagen des Standes der Technik wird das Anheben der Last durch eine Schub- oder Zugstange erreicht, die mit der Tragrolle bzw. mit dem Hebel, an dem die Tragrolle gelagert ist, in Wirkverbindung steht. Mit der erfindungsgemäßen Weiterbildung wird der große Vorteil erreicht, daß die ohnehin vorhandene Schub- bzw. Zugstange, mit deren Hilfe der Lastträger (die Gabeln) angehoben wird, als die zum Erreichen des Lastausgleiches vorgesehene Wirkverbindung genutzt wird und daher der konstruktive Aufwand zur erfindungsgemäßen Koppelung von Tragrolle und Stabilisatorrolle sehr gering ist.

In einer ersten Ausgestaltung der beschriebenen Weiterbildung, die für ein Flurförderzeug vorgesehen ist, das einen Rahmen aufweist, der entlang einer quer zur Fahrzeuglängsachse angeordneten vertikalen Trennebene zweigeteilt ist und der aus einem das Antriebsrad tragenden Rahmenteil und einem lasttragenden Rahmenteil besteht, wobei die Tragrolle am lasttragenden Rahmenteil gelagert ist, wird vorgeschlagen, daß ein gelenkig mit der Verbindungsstange verbundener und am lasttragenden Rahmenteil gelagerter Kniehebel zwischen die Verbindungsstange und den die Stabilisatorrolle tragenden Hebelarm des Längslenkers eingefügt ist und die Stabilisatorrolle an dem das Antriebsrad tragenden Rahmenteil gelagert ist.

In einer zweiten Ausgestaltung der beschriebenen Weiterbildung, die ebenfalls für ein Flurförderzeug vorgesehen ist, das einen Rahmen aufweist, der entlang einer quer zur Fahrzeuglängsachse angeordneten vertikalen Trennebene zweigeteilt ist und der aus einem das Antriebsrad tragenden Rahmenteil und einem lasttragenden Rahmenteil besteht, wobei die Tragrolle am lasttragenden Rahmenteil gelagert ist, wird vorgeschlagen, daß ein als mehrgliedriger Zwischenhebel ausgebildeter Kniehebel zwischen das lasttragende Rahmenteil und den gelenkig an dem das Antriebsrad tragenden Rahmenteil gelagerten Längslenker eingefügt ist, der am Ende des ersten Hebelarms die Stabilisatorrolle trägt und mit dem Ende des zweiten Hebelarms gelenkig mit der Verbindungsstange verbunden ist.

Im ersten Fall wird eine Quasi-Längenverstellung der Verbindungsstange bewirkt, wodurch die Bodenfreiheit, d.h. der Abstand zwischen Rahmen und Fahrbahn eines erfindungsgemäßen Flurförderzeugs verändert wird. Eine andere Möglichkeit, die Bodenfreiheit zu verändern besteht darin, den Befestigungspunkt eines Längslenkers am Rahmen zu modifizieren, was einer Quasi-Längenverstellung des Rahmens entspricht und im zweiten Fall bewirkt wird.

Es ist darüberhinaus günstig, wenn mindestens einer der Hebelarme längen- und/oder winkelverstellbar ist. Durch geeignete Wahl der Hebellängen und der Winkel zwischen den Hebelarmen werden verschiedene Übersetzungs- und Symmetrieverhältnisse geschaffen und können somit unterschiedliche Auflagerkräfte an den Trag- und Stabilisatorrollen eingestellt werden.

Weitere Vorteile und Einzelheiten der Erfindung werden anhand zweier in den Figuren schematisch dargestellter Ausführungsbeispiele näher erläutert. Es zeigen:
- Figur 1: den Prinzipaufbau eines Fahrgestells eines erfindungsgemäßen Flurförderzeugs mit vier Rädern
- Figur 2: den Prinzipaufbau eines Fahrgestells eines erfindungsgemäßen Flurförderzeugs mit fünf Rädern
- Figur 3: eine Prinzipskizze zu einer symmetrischen Gestängeverbindung mit längenveränderbarer Schubstange
- Figur 4: eine Prinzipskizze zu einer asymmetrischen Gestängeverbindung mit veränderbarer Länge des Rahmens
- Figur 5: eine Draufsicht auf einen Elektro-Deichsel-Hubwagen des Standes der Technik
- Figur 6a bis 6c: die Seitenansicht des Elektro-Deichsel-Hubwagens nach Figur 5
- Figur 7: eine Prinzipdarstellung eines erfindungsgemäßen Elektro-Deichsel-Hubwagens in Seitenansicht gemäß einem ersten Ausführungsbeispiel
- Figur 8: eine Prinzipdarstellung eines erfindungsemäßen Elektro-Deichsel-Hubwagens in perspektivischer Ansicht gemäß einem zweiten Ausführungsbeispiel
In den zu beschreibenden Figuren 1 bis 4 sind lediglich die zum Verständnis der Erfindung unbedingt nötigen Teile eines erfindungsgemäßen Flurförderzeugs schematisch dargestellt.

Der restliche Aufbau eines Flurförderzeugs kann als bekannt vorausgesetzt werden.

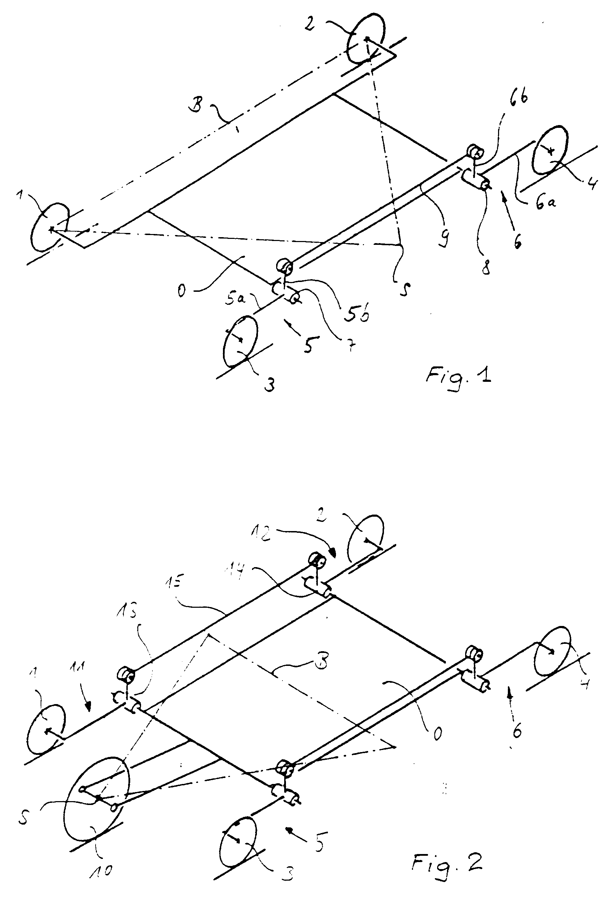

Figur 1 zeigt das Fahrgestell eines Flurförderzeugs mit vier Rädern 1 bis 4. Es versteht sich von selbst, daß anstelle von einzelnen Rädern auch sogenannte Tandemräder vorgesehen sein können. Die Räder 1 und 2 der in der Figur linken Fahrzeugseite sind in vertikaler Richtung starr an einem Rahmen 0 befestigt. Sie können angetrieben und/oder lenkbar sein, was in der Figur jedoch der besseren Übersichtlichkeit halber nicht dargestellt ist. Die Räder 3 und 4 der in der Figur rechten Fahrzeugseite sind mittels je eines Längslenkers 5 und 6 an Lagern 7 und 8 am Rahmen 0 gelagert. Die Längslenker 5 und 6 weisen die Form von Kniehebeln auf und bestehen jeweils aus zwei Hebelarmen 5a und 5b bzw. 6a und 6b, wobei an den Hebelarmen 5a und 6a die Räder 3 und 4 befestigt sind. Die lagerfernen Enden der Hebelarme 5b und 6b sind über eine Schubstange 9 gelenkig miteinander verbunden. Eine beispielsweise auf das Rad 4 einwirkende Kraft, die bestrebt ist, den Hebelarm 6a des Längslenkers 6 anzuheben (aufgrund einer Fahrbahnerhebung) und entgegen dem Uhrzeigersinn zu drehen, wird über die Schubstange 9 in den Längslenker 5 eingeleitet und dreht diesen ebenfalls entgegen dem Uhrzeigersinn bis sich das Rad 3 auf der Fahrbahn abstützt. Damit ist ein vollkommener Lastausgleich zwischen den Rädern 3 und 4 gegeben und im Falle, daß symmetrische Verhältnisse vorliegen, tragen beide Räder die gleiche Last. Trotz der Einleitung der an den Rädern 1 bis 4 auftretenden Kräfte in den Rahmen 0 über vier Stellen, ergibt diese Anordnung ein Stützdreieck, das in der Figur strichpunktiert dargestellt ist. Obwohl das Flurförderzeug vierrädrig ausgebildet ist, wird es statisch bestimmt auf der Fahrbahn abgestützt. Die besondere Lage des Stützdreiecks, dessen Basis B von der Verbindungslinie der Räder 1 und 2 gebildet wird und dessen Spitze S bei der dargestellten symmetrischen Anordnung die Verbindungslinie der Räder 3 und 4 halbiert, kann beispielsweise dann mit Vorteil genutzt werden, wenn das Flurförderzeug als Seitenstapler ausgebildet ist, bei dem bekanntermaßen speziell in einer Richtung eine erhöhte Seitenstabilität erforderlich ist.

Anstelle der beschriebenen mechanischen lastausgleichenden Wirkverbindung zwischen den Rädern 3 und 4 kann auch eine hydraulische lastausgleichende Koppelung vorgesehen werden, die die gleiche Funktion hat.

In Figur 2 ist der Fahrgestell-Prinzipaufbau eines fünfrädrigen deichselgelenkten Flurförderzeugs in erfindungsgemäßer Ausbildung dargestellt. Zusätzlich zu den Rädern 1 bis 4 ist im Bereich der Längsmittelachse ein fünftes Rad 10 vorgesehen. Das Rad 10 stellt das deichselseitige und somit gelenkte Antriebsrad eines Hubwagens dar. Die Räder 2 und 4 stellen die lastarmseitigen Tragrollen dar und die Räder 1 und 3 sollen aus Nachlauf-Stabilisatorrollen ausgebildet sein. Gegenüber dem Flurförderzeug nach Figur 1 stehen nunmehr auch die Räder 1 und 2 analog zu den Rädern 3 und 4 lastausgleichend in Wirkverbindung miteinander. Zu diesem Zweck sind Längslenker 11 und 12, Lagerstellen 13 und 14 und eine Schubstange 15 vorgesehen. Man erhält dadurch ständigen Kontakt der fünf Räder zur Fahrbahn. Insbesondere ist sichergestellt, daß das deichselseitige Antriebsrad 10 stets genügenden Kontakt hat, unabhängig von der Fahrbahnbeschaffenheit. Die Kraftaufteilung auf die Räder ist isostatisch, d. h. statisch bestimmt und im Falle, daß die Hebelverhältnisse an den Tragrollen und Stabilisatorrollen symmetrisch sind, resultieren daraus gleiche Achslasten.

Es wird dabei ein Stützdreieck gebildet, dessen Basis B bei der gezeigten symmetrischen Ausführung des Flurförderzeugs von einer Linie gebildet wird, die die Verbindungslinie der Räder 1 und 2 und der Räder 3 und 4 jeweils halbiert. Die Spitze S des Stützdreiecks wird von dem Antriebsrad 10 gebildet. Es werden somit statt wie in Figur 1 an vier Stellen an fünf Stellen Auflagerkräfte in den Rahmen 0 eingeleitet, was die Rahmenverformungen vermindert (insbesondere die Torsionsbeanspruchung reduziert) und die Standsicherheit eines derartig ausgebildeten Flurförderzeugs beträchtlich erhöht. Darüber hinaus ist unter allen Fahrbedingungen gewährleistet, daß das Antriebsrad stets ausreichenden Bodenkontakt hat.

Die lastausgleichende Wirkverbindung zwischen Tragrolle und Stabilisatorrolle ist nicht auf die in den Figuren 1 und 2 gezeigte Ausführungsart beschränkt. So ist es zum Beispiel möglich, anstelle einer Schubstange eine Zugstange vorzusehen, wobei in diesem Fall die Hebelarme, an denen die Zugstange befestigt ist, in Richtung zur Fahrbahnoberfläche angeordnet sind, d.h. unterhalb des in den Figuren flächig dargestellten Rahmens 0. Es ist auch möglich, z. B. durch Änderung der Formgebung der Längslenker eine Anordnung zu erreichen, bei der die Längslenker in Richtung zur Fahrzeugquermittelachse (entsprechend der Basis B des Stützdreiecks in Figur 2) weisen.

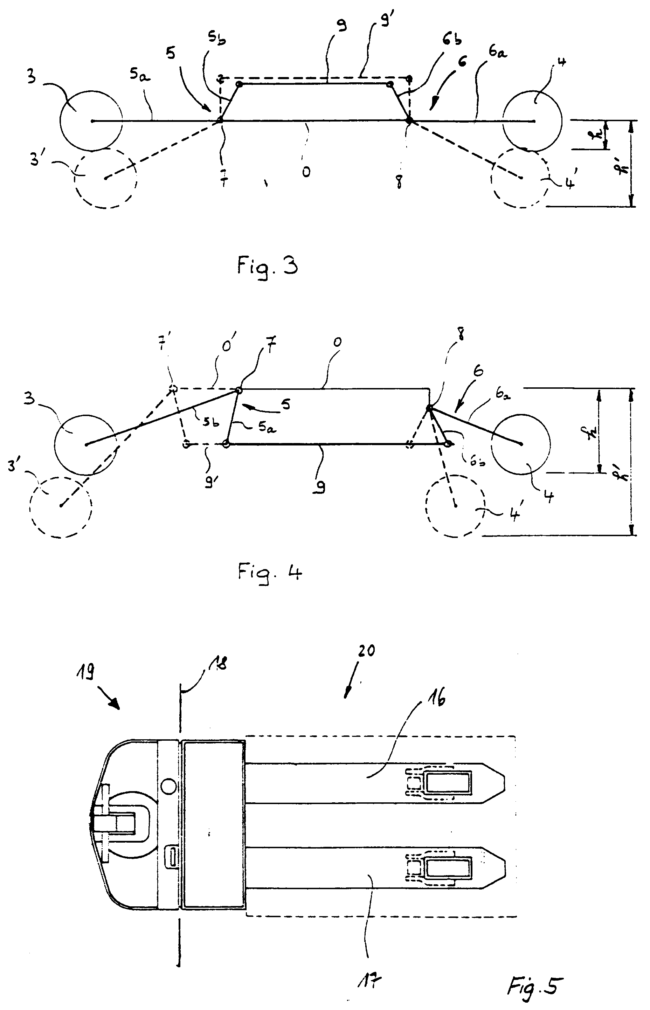

In Figur 3 ist eine symmetrische Gestängeverbindung zwischen dem Rad 3 und dem Rad 4 dargestellt, bei der die Längslenker 5 und 6 gleiche Hebelarmlängen aufweisen und bei der eine Schubstange 9 verwendet wird. Die Figur zeigt darüberhinaus in gestrichter Darstellung die Ausnutzung eines der Parameter, mit denen eine Veränderung der Bodenfreiheit des erfindungsgemäß ausgebildeten Flurförderzeugs erreichbar ist. Durch Längenveränderung der Schubstange 9 mittels einer in der Figur nicht gezeigten und dafür geeigneten Vorrichtung kann der Abstand des Rahmens 0 zur Fahrbahnoberfläche zwischen den Werten h und h' bevorzugt stufenlos eingestellt werden.

Im Vergleich zu Figur 3 zeigt Figur 4 eine asymmetrische Gestängeverbindung mittels einer Zugstange 9. Die Figur zeigt gleichfalls in gestrichter Darstellung die Ausnutzung eines weiteren Parameters (Längenänderung des Rahmens bzw. Änderung des Längsabstandes zwischen den Lagerstellen der Längslenker durch eine in der Figur nicht gezeigte Vorrichtung) zur Verstellung der Bodenfreiheit zwischen h und h', wobei gleichzeitig infolge der unterschiedlichen Hebelarmlängen der Längslenker eine unterschiedliche Lastverteilung auf die Räder vorgesehen ist.

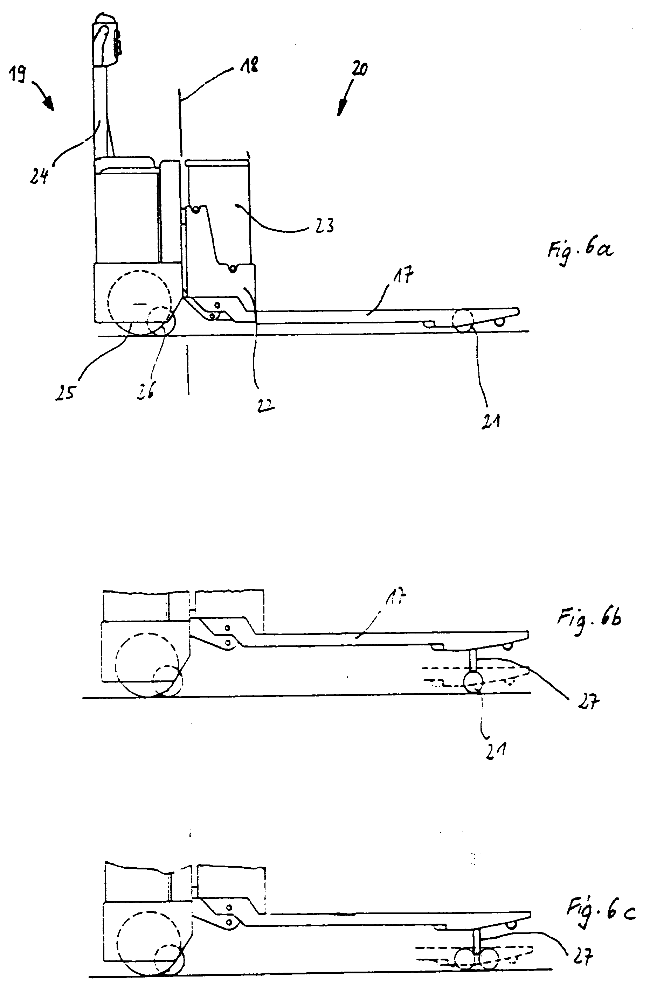

Figur 5 zeigt eine Draufsicht auf einen Elektro-Deichsel-Hubwagen des Standes der Technik. Hierbei sind mit 16 und 17 die Lasttragarme bezeichnet. Eine auf den Lasttragarmen 16 und 17 angeordnete Last ist gestricht dargestellt. Der Hubwagen ist entlang einer Trennebene 18 vertikal zweigeteilt in ein Rahmenteil 19, das den Antriebsmotor trägt, und ein Rahmenteil 20, an dem die Lasttragarme 16 und 17 befestigt sind. Die Rahmenteile 19 und 20 sind auf nicht dargestellte Weise miteinander gelenkig verbunden, derart, daß das Rahmenteil 20 und somit die Lasttragarme 16 und 17 höhenverstellbar sind. Der Aufbau des Hubwagens ist insbesondere in der Zusammenschau mit Figur 6a ersichtlich, die eine Seitenansicht zeigt. Die Lasttragarme 16 und 17 sind über Tragrollen 21, die am trennebenenfernen Ende der Lasttragarme 16 und 17 angeordnet sind, auf der Fahrbahn abgestützt. Das Rahmenteil 20 weist neben den Lasttragarmen 16 und 17 einen Batteriekasten 22 auf, in dem sich ein auswechselbarer Batterieblock 23 befindet. Das Rahmenteil 19 ist mit einer Lenk-Antriebs-Einheit versehen. Diese besteht aus einem mittels einer Deichsel 24 lenkbaren Antriebsrad 25. Beiderseits des Antriebsrades sind Nachlauf-Stabilisatorrollen 26 vorgesehen, die beispielsweise federnd auf der Fahrbahn abgestützt sind. Figur 6b zeigt den Hubwagen bei angehobenen Lasttragarmen 16 und 17. Dabei ist erkennbar, daß jede Tragrolle 21 mittels eines Längslenkers 27 am Lasttragarm 16 bzw. 17 befestigt ist. Figur 6c entspricht Figur 6b, wobei hier die Tragrollen als Tandemrollen ausgebildet sind.

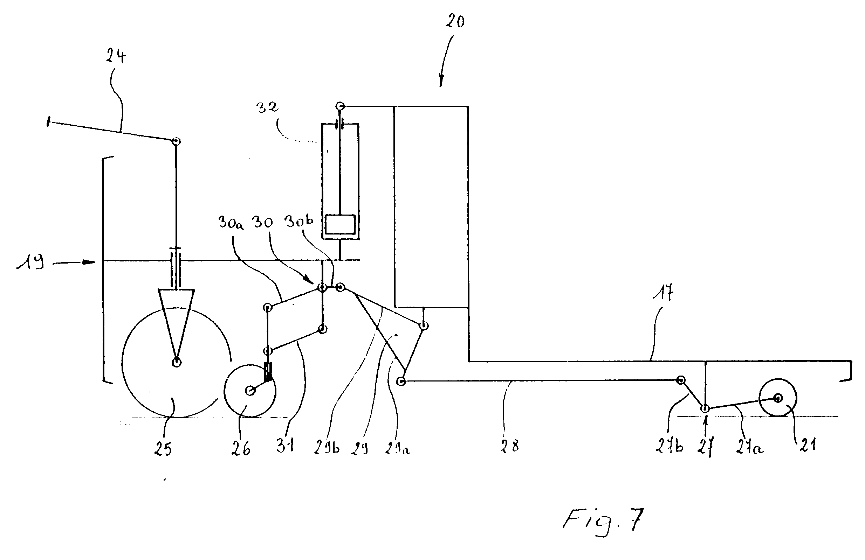

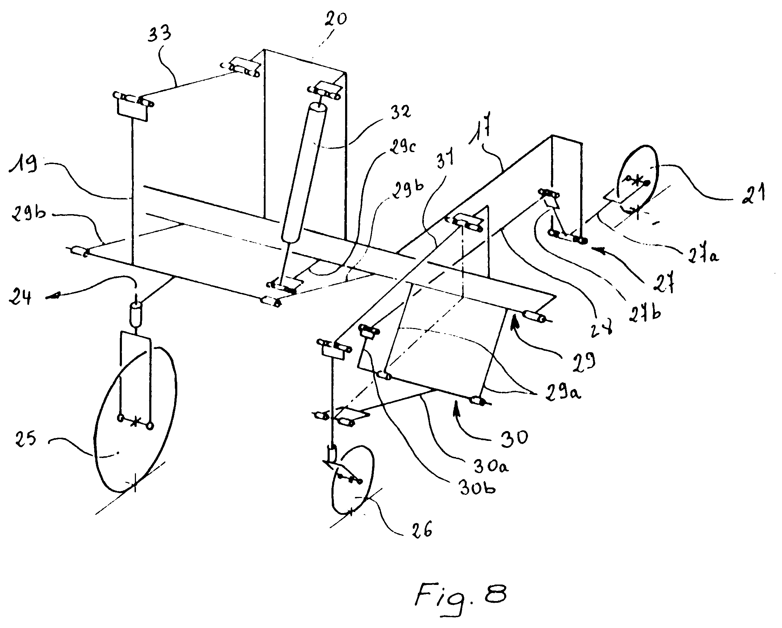

Die Mechanik, die ein Anheben des Rahmenteils 20 ermöglicht, ist als Prinzipdarstellung in zwei Ausbildungsformen in den Figuren 7 und 8 gezeigt.

Figur 7 stellt eine erste Ausbildungsform eines deichselgelenkten elektrischen Flurförderzeugs gemäß dem in den Figuren 5 und 6 gezeigten Typ dar. Der Aufbau des Flurförderzeugs ist in Seitenansicht dargestellt. Hierbei ist der am Lasttragarm 17 gelagerte Längslenker 27, der einen mit der Tragrolle 21 versehenen ersten Hebelarm 27a aufweist, über einen zweiten Hebelarm 27b mit einer Schubstange 28 gekoppelt, die über einen Hebelarm 29a eines Kniehebels 29 am Rahmenteil 20 gelagert ist. Der andere Hebelarm 29b des Kniehebels 29 ist mit einem Längslenker 30 gelenkig verbunden, der am Rahmenteil 19 gelagert ist. Der Längslenker 30 weist einen ersten Hebelarm 30a auf, an dem eine Stabilisatorrolle 26 befestigt ist, und einen zweiten Hebelarm 30b, der mit dem Hebelarm 29b des Kniehebels 29 verbunden ist. Der Hebelarm 30a bildet mit einer Spurstange 31 ein Parallelogramm, das auf einfache Weise eine Vertikalführung der Stabilisatorrolle 26 ermöglicht.

Die soeben beschriebene Untereinheit ermöglicht auf die in Figur 2 gezeigte Weise die Lastaufteilung auf die fünf Räder und gewährleistet, wie auch immer die Fahrbedingungen sein mögen, daß die fünf Räder, insbesondere das Antriebsrad 25, stets mit der Fahrbahnoberfläche in Kontakt bleiben. Der Einbau des Kniehebels 29 zwischen Schubstange 28 und Längslenker 30 ist dabei das Mittel, das eingesetzt wird, um gemäß der Beschreibung zu Figur 3 eine Quasi-Längenveränderung der Schubstange 28 zu realisieren. Der Kniehebel 29 greift nämlich gleichzeitig in die aus dem bekannten Stand der Technik an sich bekannte Funktion der Lastanhebung ein. Um die Last anzuheben ist ein Hubzylinder-Kolben-Aggregat 31 zylinderseitig am Rahmenteil 19 und kolbenseitig am Rahmenteil 20 befestigt und ermöglicht mit Hilfe des Längslenkers 30 und des Kniehebels 29 die Führung des Rahmenteils 20 gegenüber dem Rahmenteil 19 und aufgrund der Lagerung des Kniehebels 29 am Rahmenteil 20 gleichzeitig das Anheben des Rahmenteils 20, sofern die dazu notwendige Energie bereitgestellt wird.

Figur 8 zeigt eine zweite Ausbildungsform eines deichselgelenkten elektrischen Hubwagens der erfindungsgemäßen Art, wie er in den Figuren 5 und 6 dargestellt ist. Der Aufbau der Vorrichtung ist perspektivisch dargestellt, wobei dieselben Bezugszeichen Verwendung finden wie in den Figuren 2 und 4. Bei der dargestellten Vorrichtung ist der am Lastträger 17 befestigte Längslenker 27 am Außenende des Hebelarms 27a mit der Tragrolle 21 versehen und steht durch das Außenende des anderen Hebelarms 27b mit der Schubstange 28 gelenkig in Verbindung. Der Längslenker 30 der Stabilisatorrolle 26, der an dem als mehrgliedriger Vorgelegehebel ausgebildeten Kniehebel 29 angelenkt ist, weist einen gelenkig mit dem der Tragrolle 21 entgegengesetzten Ende der Schubstange 28 in Verbindung stehenden Hebelarm 30b auf und einen Hebelarm 30a, der zusammen mit der Spurstange 31 ein Pseudo-Parallelogramm definiert, das der Führung der Nachlauf-Stabilisatorrolle 26 dient.

Die soeben beschriebene Untereinheit ermöglicht auf die in Figur 2 gezeigte Weise die Lastverteilung auf die fünf Räder und stellt sicher, wie auch immer die Fahrbedingungen sein mögen, daß die fünf Räder, insbesondere das Antriebsrad in ständigem Kontakt mit der Fahrbahnoberfläche bleiben. Die Gelenkverbindung des Längslenkers 30 zu dem mehrgliedrigen Vorgelegehebel 29 ist das Mittel, welches ausgenutzt wird, um gemäß der Beschreibung zu Figur 4 eine Längenveränderung des Rahmens bzw. Abstandsveränderung der Lagerstellen der Längslenker zu bewirken. Der mehrgliedrige Vorgelegehebel 29 ist gleichzeitig an der Führung des Rahmenteils 20 zum Rahmenteil 19 beteiligt, indem mit dem Hebelarm 29b und einer Spurstange 33 ein nachgiebiges Parallelogramm gebildet wird. Das Zylinder-Kolben-Aggregat 32 ermöglicht mit Hilfe des Hebelarms 29c des mehrgliedrigen Vorgelegehebels 29 das Anheben des Lasttragarms 17, indem die nötige Energie geliefert wird.

## Patentansprüche

1. Flurförderzeug mit mindestens vier Rädern, von denen jeweils zwei in Fahrzeuglängsrichtung hintereinanderliegend auf einer Fahrzeugseite angeordnet sind, dadurch gekennzeichnet, daß die Räder (3, 4) zumindest einer Fahrzeugseite lastausgleichend miteinander verbunden sind.

2. Flurförderzeug nach Anspruch 1, insbesondere Hubwagen, mit zwei auf einer gemeinsamen Querachse angeordneten, voneinander beabstandeten Tragrollen, einem deichselgelenkten Antriebsrad, das in Fahrzeuglängsrichtung zur Tragrollenachse beabstandet ist, und einer seitlich des Antriebsrades beabstandeten, als Nachlaufrolle ausgebildeten Stabilisatorrolle, dadurch gekennzeichnet, daß die Stabilisatorrolle (3) mit der Tragrolle (4) derjenigen Fahrzeugseite, in deren Bereich die Stabilisatorrolle (3) angeordnet ist, lastausgleichend in Wirkverbindung steht.

3. Flurförderzeug nach Anspruch 2, wobei das deichselgelenkte Antriebsrad im Bereich der Fahrzeuglängsmittelachse angeordnet und beiderseits des Antriebsrades je eine Stabilisatorrolle vorgesehen ist, dadurch gekennzeichnet, daß jeweils die Stabilisatorrolle (1 bzw. 3) mit der Tragrolle (2 bzw. 4) derjenigen Fahrzeugseite, in deren Bereich die Stabilisatorrolle (1 bzw. 3) angeordnet ist, lastausgleichend in Wirkverbindung steht.

4. Flurförderzeug nach Anspruch 2 oder 3, wobei die lastausgleichend miteinander in Wirkverbindung stehenden Rollen jeweils mittels eines Längslenkers am Rahmen des Flurförderzeugs gelagert sind, dadurch gekennzeichnet, daß jeder Längslenker (5,6) zusätzlich zu dem Hebelarm (5a,6a), an dem die Rolle (3,4) befestigt ist, einen zweiten Hebelarm aufweist (5b,6b), der mit einer sowohl auf Zug als auch auf Druck belastbaren Verbindungsstange (9) gelenkig verbunden ist.

5. Flurförderzeug nach einem der Ansprüche 1 bis 4, wobei ein Hubmechanismus zum Anheben der Last vorgesehen ist, dadurch gekennzeichnet, daß der Hubmechanismus in die lastausgleichende Wirkverbindung integriert ist.

6. Flurförderzeug nach den Ansprüchen 4 und 5, das einen Rahmen aufweist, der entlang einer quer zur Fahrzeuglängsachse angeordneten vertikalen Trennebene zweigeteilt ist und der aus einem das Antriebsrad tragenden Rahmenteil und einem lasttragenden Rahmenteil besteht, wobei die Tragrolle am lasttragenden Rahmenteil gelagert ist, dadurch gekennzeichnet, daß ein gelenkig mit der Verbindungsstange (28) verbundener und am lasttragenden Rahmenteil (20) gelagerter Kniehebel (29) zwischen die Verbindungsstange (28) und den die Stabilisatorrolle (26) tragenden Hebelarm (30a) des Längslenkers (30) eingefügt ist, der gelenkig mit der Verbindungsstange (28) verbunden ist, und die Stabilisatorrolle (26) an dem das Antriebsrad (25) tragenden Rahmenteil (19) gelagert ist.

7. Flurförderzeug nach den Ansprüchen 4 oder 5, das einen Rahmen aufweist, der entlang einer quer zur Fahrzeuglängsachse angeordneten vertikalen Trennebene zweigeteilt ist und der aus einem das Antriebsrad tragenden Rahmenteil und einem lasttragenden Rahmenteil besteht, wobei die Tragrolle am lasttragenden Rahmenteil gelagert ist, dadurch gekennzeichnet, daß ein als mehrgliedriger Zwischenhebel ausgebildeter Kniehebel (29) zwischen das lasttragende Rahmenteil (20) und den gelenkig am Rahmenteil (20) gelagerten Längslenker (30) eingefügt ist, der am Ende des ersten Hebelarms (30a) die Stabilisatorrolle (26) trägt und mit dem Ende des zweiten Hebelarms (30b) gelenkig mit der Verbindungsstange (28) verbunden ist.

8. Flurförderzeug nach einem der Ansprüche 2 bis 7, dadurch gekennzeichnet, daß mindestens einer der Hebelarme längen- und/oder winkelverstellbar ist.
